# EUROPÄISCHE PATENTSCHRIFT

(11) **EP 4 306 818 B1**
(45) Veröffentlichungstag und Bekanntmachung des Hinweises auf die Patenterteilung: **23.04.2025**
(21) Anmeldenummer: 23178879.5
(22) Anmeldetag: 13.06.2023
(51) Int. Cl.: F16D 13/52, B61L 5/06, F16H 25/20

(54) **STELLKRAFTKUPPLUNG**
ACTUATING FORCE COUPLING
EMBRAYAGE À FORCE DE RÉGLAGE

(30) Priorität: 30.06.2022 DE 102022206719
(43) Veröffentlichungstag der Anmeldung: 17.01.2024
(73) Patentinhaber: Siemens Mobility GmbH, 81739 München (DE)
(72) Erfinder: Hillebrecht, Falk, 12437 Berlin (DE); Woolston, Sven, 12247 Berlin (DE)
(74) Vertreter: Siemens Patent Attorneys

(56) Entgegenhaltungen:
- EP-A1- 3 997 363
- CN-A- 1 152 084
- DE-A1- 19 525 012
- DE-A1- 4 427 809
- DE-U1- 8 402 949

## Beschreibung

Aus den Druckschriften DE 44 27 809 A1 und CN 1 152 084 A ist eine mit einem Kugelgewindetrieb baulich vereinigte Reibkupplung bekannt, bei welcher ein drehsteif mit einer Spindelmutter des Kugelgewindetriebes verbundener Hohlzylinder, in welchem die Spindelmutter längsverschiebbar angeordnet ist, von zwei Kupplungsgehäuseteilen festgehalten wird, solange die der Reibkupplung eigene Stellkraft nicht überschritten wird. Dabei bauen Tellerfedern auf Reibflächen wirkende Reibkräfte auf, indem sie sich jeweils über Abdruckteile in Form von Führungsringen und einem jeweiligen Drucklager, an einem der Gehäuseteile und an der Spindelmutter derart abstützen, dass sich ein Kräftegleichgewicht einstellt.

Die Erfindung betrifft eine Stellkraftkupplung, insbesondere für einen elektromechanischen Weichenantrieb im Bahnverkehr, mit einer um eine Axialrichtung der Stellkraftkupplung herum rotierbar antreibbaren Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist und das Kupplungsgehäuse mittels zweier koaxialer Axialrillenkugellager auf der Kupplungsnabe drehbar gelagert ist. Ferner betrifft die Erfindung eine elektromechanische Stelleinrichtung für einen Weichenantrieb sowie einen Weichenantrieb für den Bahnverkehr.

Belastbare und zuverlässige Weichen sind ein entscheidender Faktor für eine Verbesserung einer Streckennutzung im Bahnverkehr. Insbesondere bei den wachsenden Anforderungen an die modernen Bahnen, z. B. im Fernverkehr, wo auch hohe Geschwindigkeiten auf einem abzweigenden Gleis der Weiche gefahren werden. Aber auch im Nah- und Güterverkehr entstehen hohe Belastungen, welche auf die Weichen wirken. Ein Weichenantrieb spielt daher eine wichtige Rolle für eine Sicherheit im Bahnverkehr. Er sollte präzise arbeiten, zuverlässig und hoch belastbar sein, sowie wirtschaftlich und vielseitig im Nah- und Fernverkehr für Weichen möglichst aller Bauarten und Spurweiten einsetzbar sein.

Ein elektromechanischer Weichen(stell)antrieb hat insbesondere folgende Aufgaben sicher und zuverlässig zu erledigen. Ein Umstellen einer Weiche, ein Festhalten der Weichenzungen der Weiche in deren Endlagen, ein mechanisches Sichern des Weichenverschlusses, ein elektrisches/elektronisches Melden eines Stellvorgangs und einer Endlage der Weichenzungen an ein Stellwerk, ein Öffnen der Auffahrkupplung im Weichenantrieb beim Auffahren der Weiche durch ein Fahrzeug und Abgeben einer Auffahrmeldung an eine Überwachungseinrichtung, etc.

Nicht nur während eines Stellbetriebs des Weichenantriebs selbst, sondern auch abseits davon werden beim Überfahren der Weiche, insbesondere bei einem Auffahren der Weiche, mit einem Fahrzeug hohe Kräfte in den Weichenantrieb eingeleitet, welche die Stellkraftkupplung schädigen und so langfristig zum Ausfall der Stellkraftkupplung und somit des Weichenantriebs führen können. - Es ist daher eine Aufgabe der Erfindung, eine verbesserte Stellkraftkupplung für einen Weichenantrieb sowie einen verbesserten Weichenantrieb anzugeben.

Die Aufgabe der Erfindung ist mittels einer Stellkraftkupplung, insbesondere für einen elektromechanischen Weichenantrieb im Bahnverkehr, mittels einer elektromechanischen Stelleinrichtung für einen Weichenantrieb im Bahnverkehr, und mittels eines Weichenantriebs für den Bahnverkehr, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Untersuchungen von Weichenantrieben für den Bahnverkehr, welche eine bereits lange Einsatzdauer absolviert haben, haben gezeigt, dass ein derzeitiges Problem einer Lebensdauerbegrenzung der Weichenantriebe, trotz deren bereits hohen durchschnittlichen Lebensdauern, die während einer Lebensdauer eingeleiteten Kräfte in einen Weichenantrieb und dort insbesondere die in eine Stellkraftkupplung eingeleiteten Axialkräfte sind. Diese Axialkräfte schädigen insbesondere die dort eingesetzten dreiteiligen Axialrillenkugellager mit ihren zwei Axiallagerschalen und einem Kugelkäfig mit den Wälzkugeln.

Einem Funktionsprinzip einer Stellkraftkupplung folgend ergeben sich ferner während einer Stellkraftbegrenzung der Stellkraftkupplung kurze kraftfreie zeitliche Momente (rechter/linker Anschlag einer Überlastkupplung der Stellkraftkupplung). Dies führt bei den eingesetzten dreiteilig losen Axialrillenkugellagern zu einem Trennen eines mechanischen Kontaktverbands der Axiallagerschalen und des Kugelkäfigs.

D. h. bei einem Entlasten des Axialrillenkugellagers hebt sich dessen Kontaktverband für eine kurze Zeitspanne auf und bekommt ,Luft'. Der Kugelkäfig mit seinen Wälzkugeln fällt aus einer Rille einer Axiallagerschale heraus und erst bei einem Einsetzen einer Gegenlast fällt der Kugelkäfig schlagartig wieder in die betreffende Rille ein. Das Trennen des Kontaktverbands kann zu einer Beschädigung des Axialrillenkugellagers und damit zu einer weniger gut kontrollierbaren Funktion der Stellkraftkupplung führen.

Die erfindungsgemäße Stellkraftkupplung weist eine um eine Axialrichtung der Stellkraftkupplung herum rotierbar antreibbare Kupplungsnabe auf, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist, und das Kupplungsgehäuse mittels zweier koaxialer Axialrillenkugellager auf der Kupplungsnabe drehbar gelagert ist. Erfindungsgemäß ist dabei vorgesehen, dass die Kupplungsnabe radial innerhalb einer Überlastkupplung eingerichtet ist, wobei sich die Kupplungsnabe über ein jeweiliges Axialrillenkugellager in einem betreffenden Druckstück der Überlastkupplung axial abstützt und die zwei Druckstücke auf ein Lamellenpaket der Überlastkupplung axial vorgespannt einwirken, und dass ein jeweiliges Axialrillenkugellager von einer bevorzugt einzigen Axiallager-Vorspanneinrichtung in Axialrichtung vorgespant in der Stellkraftkupplung eingerichtet ist. - D. h. natürlich auch umgekehrt, dass die Kupplungsnabe mittels der zwei koaxialen Axialrillenkugellager innen im Kupplungsgehäuse drehbar gelagert ist. Statt einem Axialrillenkugellager ist auch ein Axialkugellager anwendbar.

In einem montierten Zustand der Kupplungsnabe auf der Gewindespindel bilden diese eine drehfeste Spindel-Nabe-Verbindung, d. h. eine Rotationsbewegung der Kupplungsnabe ist auf die Gewindespindel übertragbar. - D. h. ist die Stellkraftkupplung z. B. auf der Gewindespindel eines Weichenantriebs montiert, so kann die von der Stellkraftkupplung rotierbar antreibbare Gewindespindel mittels eines auf ihr eingerichteten Kugelgewindetriebs ihre Rotationsbewegung in eine lineare Stellbewegung des Kugelgewindetriebs abseits der Stellkraftkupplung wandeln. - Alternativ kann der Kugelgewindetrieb zwischen der Kupplungsnabe und der Gewindespindel eingerichtet sein.

Gemäß der Erfindung ist also eine Dreiteiligkeit der Axialrillenkugellager dergestalt ein Problem, dass die zwei Lagerschalen und der Kugelkäfig als eine Baugruppe einen in Axialrichtung losen Kontaktverband bilden, welcher darüber hinaus nicht zusammengehalten ist. - Gemäß der Erfindung ergibt sich eine Lösung in Form eines mechanisch permanent vorgespannten Axialrillenkugellagers. Hierbei kann die Auflösung des Montageverbunds des Axialrillenkugellagers vermieden werden. D. h. bei dem Axialrillenkugellager ist ein Auftreten von ,Luft' wenigstens reduziert, da dessen Montageverbund aufgrund der Axiallager-Vorspanneinrichtung auch in einem axiallastfreien Zustand des Axialrillenkugellagers gegeben ist. Hierdurch lassen sich undefinierte Lagerzustände, unzeitiger und unbestimmter Verschleiß, eine über die Zeit entstehende höhere Stellkraft, Lagerschäden und erhöhte Kosten nach Auslieferung (NCC-Kosten) vermeiden.

Das jeweilige Axialrillenkugellager kann als eine dreiteilig lose oder eine einteilige Baugruppe ausgebildet sein. Die Axiallagerschalen des jeweiligen Axialrillenkugellagers können in horizontaler Axialrichtung angeordnet sein. In Axialrichtung zwischen den Axiallagerschalen befindet sich natürlich ein Kugelkäfig mit den Wälzkugeln des Axialrillenkugellagers. Das jeweilige Axialrillenkugellager kann selbst als ein spielarmes oder ein mechanisch vorgespanntes Axialrillenkugellager ausgebildet sein.

Die Stellkraftkupplung kann derart ausgebildet sein, dass in einem Stellbetrieb der Stellkraftkupplung die Überlastkupplung im Wesentlichen geschlossen bleibt. Im Stellbetrieb der Stellkraftkupplung rotiert die Kupplungsnabe die Gewindespindel und stellt dieser eine Stellkraft zur Verfügung. Die Stellkraft stammt aus dem rotierbaren Kupplungsgehäuse, welches über die geschlossene Überlastkupplung im Wesentlichen drehfest mit der Kupplungsnabe verbunden ist.

Ferner kann die Stellkraftkupplung derart ausgebildet sein, dass bei einem Begrenzen einer Stellkraft der Gewindespindel durch die Stellkraftkupplung, die Überlastkupplung gelöst ist. Beim Begrenzen der Stellkraft, z. B. weil die Gewindespindel nicht mehr weiterrotiert werden kann (z. B. Stelleinrichtung (vgl. unten) in Endlage (erster oder zweiter Anschlag), ggf. auch Endlage(n) der Weichenzungen oder Endlage des Herzstücks)), begrenzt die gelöste Überlastkupplung eine von der Kupplungsnabe auf die Gewindespindel aufgeprägte Stellkraft.

Des Weiteren kann die Stellkraftkupplung derart ausgebildet sein, dass beim Begrenzen der Stellkraft die axial gegeneinander vorgespannten Lamellen der Überlastkupplung aneinander vorbeigleiten. D. h. die Lamellen der Überlastkupplung sind beim Begrenzen der Stellkraft bevorzugt nicht ausrückbar, sondern behalten ihre gegenseitige Vorspannkraft. Beim Begrenzen der Stellkraft wird eine Umfangskraft zwischen den Lamellen größer als eine gegenseitige Haftkraft aufgrund ihrer mechanischen Vorspannkraft.

Die Überlastkupplung ist als eine Lamellen-Überlastkupplung ausgebildet.

Des Weiteren kann das Lamellenpaket der Überlastkupplung axial zwischen den Axialrillenkugellagern eingerichtet sein. Bevorzugt trägt die Kupplungsnabe radial außen die wenigstens eine Innenlamelle, und hält das Kupplungsgehäuse radial innen die wenigstens eine Außenlamelle der Überlastkupplung. Und natürlich ist die jeweilige Innenlamelle und die jeweilige Außenlamelle drehfest auf der Kupplungsnabe bzw. im Kupplungsgehäuse vorgesehen und dort axial verschieblich gelagert.

Die betreffende Axiallager-Vorspanneinrichtung kann als ein federnder Druckring, als eine Feder oder als eine elastische Einrichtung aus einem elastischen Material ausgebildet sein. Als Feder kann die Axiallager-Vorspanneinrichtung z. B. als eine Tellerfeder oder eine Wellfeder ausgebildet sein. Als ein Material für die Axiallager-Vorspanneinrichtung kommt z. B. ein Stahl, ein Kunststoff, ein Elastomer, ein Gummi etc. in Frage.

Die betreffende Axiallager-Vorspanneinrichtung kann als ein federnder Druckring ausgebildet sein. Der Druckring kann eine ebene ringförmige Zentrallage aufweisen, von welcher Druckvorrichtungen des Druckrings in Axialrichtung abstehen. Ferner können in Umfangsrichtung der Stellkraftkupplung die Druckvorrichtungen wechselweise in die eine und dann in die andere Axialrichtung abstehen. Des Weiteren können zwei in Umfangsrichtung direkt benachbarte Druckvorrichtungen unterschiedlicher Axialseiten des Druckrings über einen Federsteg zueinander beabstandet sein. Dementsprechend sind zwei in Umfangsrichtung direkt benachbarte Druckvorrichtungen derselben Axialseite des Druckrings über einen Federsteg, eine Druckvorrichtung der anderen Axialseite sowie einen zweiten Federsteg zueinander beabstandet im Druckring eingerichtet.

In einem montierten Zustand des Druckrings wirkt eine flächige Axialkraft auf den Druckring und verformt diesen derart, dass der Druckring dadurch eine axiale Vorspannung entgegen dieser Axialkraft aufbaut. Eine effektive Dicke des Druckrings reduziert sich dabei auf eine Dicke einer Druckvorrichtung inklusive einer Dicke der ringförmigen Zentrallage. - Die Druckvorrichtungen können ringsektorförmig im Druckring eingerichtet sein. Eine Oberfläche einer Druckvorrichtung kann als eine Gleitlagerfläche ausgebildet sein. Eine einer Gleitlagerfläche der Druckvorrichtung axial gegenübelliegende Fläche der Zentrallage kann ebenfalls als eine Gleitlagerfläche ausgebildet sein.

Die betreffende Axiallager-Vorspanneinrichtung kann in Axialrichtung zwischen der Überlastkupplung und dem jeweiligen Axialrillenkugellager eingerichtet sein. Hierbei kann die Axiallager-Vorspanneinrichtung mittelbar oder unmittelbar an der Überlastkupplung ansitzen. Ferner kann die betreffende Axiallager-Vorspanneinrichtung in Axialrichtung zwischen einer Innenschulter des/eines Druckstücks und dem jeweiligen Axialrillenkugellager eingerichtet sein. Des Weiteren kann die betreffende Axiallager-Vorspanneinrichtung in Radialrichtung mit einem Abstand über einer Außenschulter der Kupplungsnabe eingerichtet sein. Hierbei können die beiden Axiallager-Vorspanneinrichtungen bezüglich einer radialen Mittelebene der Überlastkupplung global, d. h. unter einer Vernachlässigung einer Drehlage der Axiallager-Vorspanneinrichtungen, symmetrisch in der Stellkraftkupplung eingerichtet sein.

Das jeweilige Axialrillenkugellager kann axial einerseits mittels eines Sicherungsrings im Druckstück, und axial andererseits von der Außenschulter der Kupplungsnabe sowie der Axiallager-Vorspanneinrichtung in der Stellkraftkupplung gehalten sein. - Die zwei Druckstücke können axial außen jeweils von einer Vorspanneinrichtung gegeneinander axial vorgespannt in der Stellkraftkupplung eingerichtet sein. Hierbei ist die betreffende Vorspanneinrichtung insbesondere eine Tellerfeder oder eine Tellerfederanordnung umfassend wenigstens zwei Tellerfedern.

Eine mechanische Vorspannung der jeweiligen Vorspanneinrichtung kann von einem jeweils axial außen an der Vorspanneinrichtung eingerichteten Einstellglied einstellbar und aufrechterhalten sein. Mittels eines Einstellglieds ist eine mechanische Vorspannung wenigstens der betreffenden Vorspanneinrichtung einstellbar. Das jeweilige Einstellglied kann innen im Kupplungsgehäuse eingerichtet sein, wobei das Einstellglied bevorzugt mittels einer Einstellverschraubung in Axialrichtung verstellbar im Kupplungsgehäuse eingerichtet ist.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:
die Fig. 1 eine Draufsicht auf eine herkömmliche Bahnweiche, deren Weichenzungen zum Stellen ihrer Fahrwege von einem Stellschieber eines Weichenantriebs der Weiche betätigbar sind,
die Fig. 2 eine Draufsicht auf einen oben offenen Weichenantrieb, wobei das mechanische, elektrische und elektromechanische Innere des Weichenantriebs lediglich grob schematisch dargestellt ist,
die Fig. 3 eine zentral und axial-radial geschnittene Perspektivansicht durch eine Stellkraftkupplung für einen Weichenantrieb im Bahnverkehr, z. B. den Weichenantrieb aus der Fig. 2, mit einer erfindungsgemäßen Axiallager-Vorspanneinrichtung, und
die Fig. 4 und 5 eine erfindungsgemäße Axiallager-Vorspanneinrichtung für eine Stellkraftkupplung in einer Perspektivansicht (Fig. 4) und in einer axial-radialen Seitenansicht (Fig. 5).

Obwohl die Erfindung oben und im Folgenden detaillierter durch bevorzugte Ausführungsbeispiele näher beschrieben und illustriert ist, so ist die Erfindung nicht durch die offenbarten Ausführungsbeispiele eingeschränkt, sondern ist von grundlegenderer Natur. Andere Variationen können hieraus und/oder aus Obigem (Erfindungsbeschreibung) abgeleitet werden ohne den Schutzumfang der Erfindung zu verlassen.

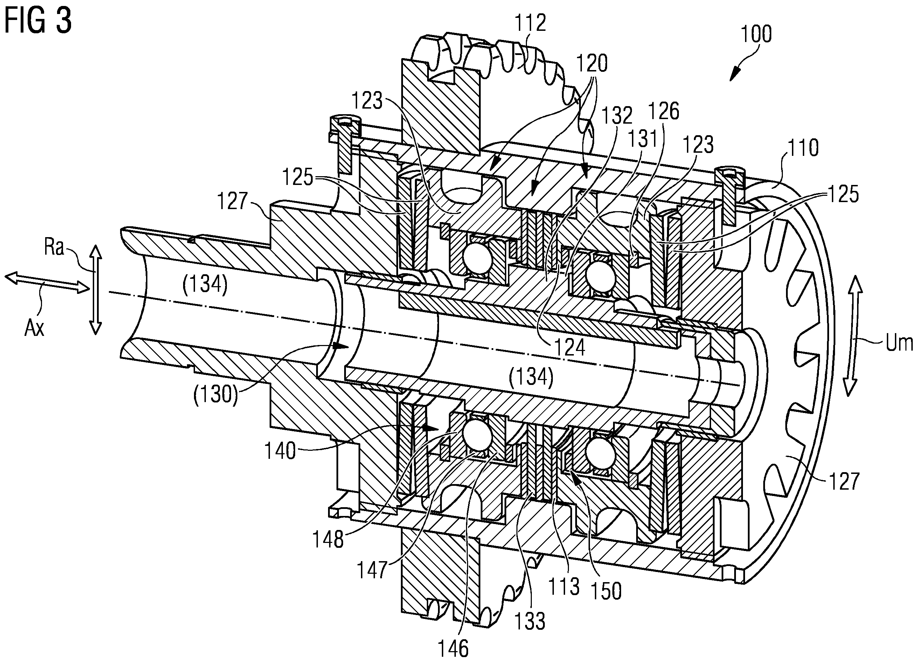

Die Erfindung ist im Folgenden anhand von Ausführungsbeispielen einer spezifischen Ausführungsform (Fig. 3) einer Variante einer Stellkraftkupplung 100 für einen Weichenantrieb 1 näher erläutert. In der Zeichnung sind nur diejenigen räumlichen Abschnitte eines Gegenstands der Erfindung dargestellt, welche für ein Verständnis der Erfindung notwendig sind. Die Erläuterung der Erfindung anhand der Zeichnung bezieht sich im Folgenden auf eine Axialrichtung Ax, eine Radialrichtung Ra und eine Umfangsrichtung Um der Stellkraftkupplung 100.

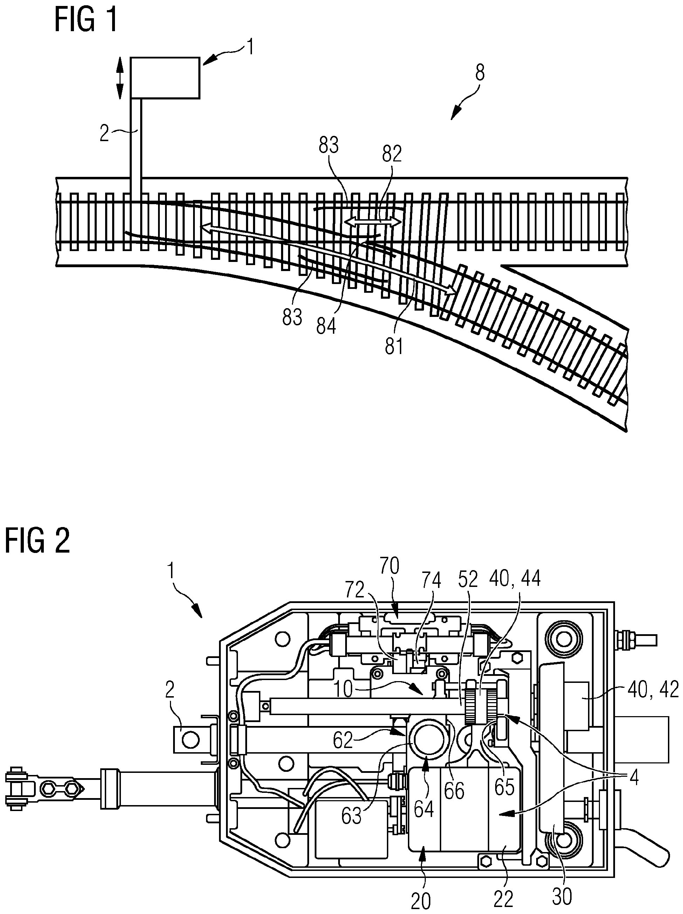

Die Fig. 1 zeigt eine Weiche 8, deren Schienen einen ersten Fahrweg 81 und einen zweiten Fahrweg 82 vorgeben. Der erste Fahrweg 81 ist derjenige, welcher bei einer entsprechenden Stellung der Weiche 8 von einem Gleis in Kurvenfahrt wegführt, während der zweite Fahrweg 82 geradeaus verläuft. Um die Weiche 8 zu stellen, ist ein Weichenantrieb 1 mit einem Stellschieber 2 vorgesehen, welcher in lateraler Richtung (Doppelpfeil am Weichenantrieb 1) hin- und herbewegbar ist und an einer inneren Weichenzunge und einer äußeren Weichenzunge der Weiche 8 befestigt ist. Auf diese Weise lassen sich die Weichenzungen betätigen, wodurch die Fahrwege 81, 82 für ein Bahnfahrzeug gestellt werden können. Die Sollpositionen des Stellschiebers 2 sind durch die Endlagen der Weichenzungen vorgegeben.

Zur zusätzlichen Führung sind Radlenker 83 sowie ein Herzstück 84 in der Weiche 8 eingerichtet. Diese verringern ein Risiko, dass ein Fahrzeug auf der Weiche 8 entgleist. Dies gilt insbesondere auch, wenn die Weiche 8 durch ein Fahrzeug aufgefahren wird. Ein Auffahren erfolgt, wenn sich aus einer Fahrtrichtung ein Fahrzeug nähert, obwohl die Weiche 8 für die andere Fahrtrichtung gestellt ist. - Während eines Betriebs des Weichenantriebs 1 treten z. B. durch Stellbewegungen, das Überfahren von Fahrzeugen und das Auffahren der Weiche 8 Stöße auf, welche insbesondere über den Stellschieber 2 in den Weichenantrieb 1 eingeleitet werden. Insbesondere ein Stellmodul 10 (vgl. Fig. 2) für den Stellschieber 2 muss diese Stöße auffangen, wodurch die für eine Spindel-Nabe-Verbindung 130 (vgl. Fig. 3) einer Stellkraftkupplung 42 (vgl. Fig. 2), 100 (vgl. Fig. 3) einer Stelleinrichtung 40 des Stellschiebers 2 zum Einsatz kommende Lagerung belastet wird.

Die Fig. 2 zeigt einen beispielhaften Weichenantrieb 1 mit einer aus dem Stellmodul 10 und einem Antriebsmodul 20 bestehenden Verstelleinrichtung 4 in einer ersten Endlage (Anschlag 65, vgl. unten), aus welcher der Weichenantrieb 1 in eine zweite Endlage (Anschlag 66) überführbar ist. Der Weichenantrieb 1 kann rechts oder links von einer Weiche 8 an einem Gleis positioniert sein und ist zum mechanischen Anschluss an hin- und herbewegbare Weichenteile, wie z. B. an Weichenzungen oder auch an ein betätigbares Herzstück 84, geeignet. Im Folgenden sei angenommen, dass der Weichenantrieb 1 mit seinem Stellschieber 2 an zwei Weichenzungen einer Weiche 8 mechanisch angeschlossen ist (vgl. Fig. 1).

Ein z. B. als ein Drehstrommotor 22 ausgebildeter Antriebsmotor 22 des Antriebsmoduls 20 rotiert über eine Getriebestufe 30, z. B. mit einem Ritzel, einem Zwischenrad und einem Großrad, oder einem Kettenantrieb (beides in Fig. 2 nicht dargestellt), eine Stellkraftkupplung 42. Eine Spindel-Nabe-Verbindung (nicht dargestellt) der Stellkraftkupplung 42 ist mit einer Gewindespindel 52 ausgebildet und weist eine auf der Gewindespindel 52 drehfest sitzende Kupplungsnabe der Stellkraftkupplung 42 auf. Die Stellkraftkupplung 42 wirkt auf einen Auffahrmechanismus 62, auch als Festhaltekupplungseinrichtung 62 bezeichenbar, des Stellmoduls 10. Der Auffahrmechanismus 62 umfasst ein Kupplungsgehäuse 63 und eine einstellbare Festhaltekupplung 64.

Beim Anlaufen des Antriebsmotors 22 rotiert die Kupplungsnabe und bewegt eine auf der Gewindespindel 52 drehsicher längsgeführte Verstellvorrichtung 44 der Stelleinrichtung 40 aus der dargestellten ersten Endlage, bei der die Verstellvorrichtung 44 an einem (ersten) Anschlag 65 des Stellmoduls 10 ansitzt, über einen Stellweg in einer Stellrichtung auf der Gewindespindel 52, bis sie an einem (zweiten) Anschlag 66 des Stellmoduls 10 ansitzt (also nach links in der Fig. 2). Hierfür ist zwischen der Stelleinrichtung 40 und der Gewindespindel 52 ein Kugelgewindetrieb eingerichtet, welcher die Rotationsbewegung der Gewindespindel 52 in eine lineare Stellbewegung der Stelleinrichtung 40 wandelt bzw. übersetzt. Das Kupplungsgehäuse 63 ist baulich vereinigt mit der einstellbaren Festhaltekupplung 64 des Auffahrmechanismus 62.

Bis zu einem Anschlagen der Verstellvorrichtung 44 am zweiten Anschlag 66 wird das Kupplungsgehäuse 63 aus der dargestellten ersten Endlage nach links in Stellrichtung mitgenommen und bewegt dabei über die Festhaltekupplung 64 den Stellschieber 2 aus der dargestellten ersten Endlage, in der sich der Stellschieber 2 weitgehend in einem Antriebsgehäuse 12 des Weichenantriebs 1 befindet, in eine zweite Endlage, in welcher der Stellschieber 2 am weitesten aus dem Antriebsgehäuse 12 ausgefahren ist. Hier nicht dargestellt ist ein Außenverschluss des Stellschiebers 2, mit welchem der Stellschieber 2 an die in den Stellrichtungen hin und herbewegbaren Weichenzungen mechanisch anschließbar ist.

Beim Rücklauf des Weichenantriebs 1 bzw. des Stellschiebers 2 aus der zweiten Antriebslage (Verstellvorrichtung 44 sitzt am zweiten Anschlag 66 an) in die in der Fig. 2 gezeigte erste Antriebslage (Verstellvorrichtung 44 sitzt am ersten Anschlag 65 an) durchläuft die Stellkraftkupplung 42 den Stellweg zwischen den Anschlägen 66, 65 des Stellmoduls 10 in umgekehrter Richtung. Die Verstellvorrichtung 44 nimmt dabei bis zum ersten Anschlag 65 den Stellschieber 2 über das Kupplungsgehäuse 63 und die Festhaltekupplung 64 mit.

Die Festhaltekupplung 64 ist dazu ausgelegt, den Weichenantrieb 1 insbesondere bei einem Auffahren der Weiche 8 vor Beschädigungen zu schützen. Die Festhaltekupplung 64 spricht dann an und gibt den Stellschieber 2 frei, wenn die Weiche 8 aufgefahren wird und dabei hohe Kräfte von außen her in den Weichenantrieb 1 hineingetragen werden. Allerdings kann die Festhaltekupplung 64 nicht verhindern, dass auf die Lagerung (in Fig. 2 nicht dargestellt) der Stellkraftkupplung 42 Stöße übertragen werden.

Der Stellschieber 2 ist im Weichenantrieb 1 in seinen beiden Endlagen bevorzugt kraft- und formschlüssig festlegbar. Hierzu dienen ein erster Sperrschieber 72 und ein zweiter Sperrschieber 74 einer Sperrvorrichtung 70, wobei der erste Sperrschieber 72 für die erste Endlage in eine entsprechende erste Ausnehmung (nicht dargestellt) des Stellschiebers 2 einfallen kann, und der zweite Sperrschieber 74 für die zweite Endlage in eine entsprechende zweite Ausnehmung des Stellschiebers 2 einfallen kann (nicht dargestellt). Dies geschieht z. B. mittels Federvorrichtungen. - Beim Erreichen einer Endlage können wiederum Stöße auftreten, welche durch den Stellschieber 2 in die Lagerung der Stellkraftkupplung 42 eingeleitet werden und diese mechanisch belasten.

Bei einem Auffahren der durch den Weichenantrieb 1 gesteuerten Weiche 8 (nur möglich bei der Steuerung von Weichenzungen, nicht möglich bei der Steuerung eines Herzstückes) werden nach dem Lösen eines Weichenverschlusses von der Weichenseite her über den Stellschieber 2 erhebliche Kräfte in den Weichenantrieb 1 eingeleitet. Sobald dabei die Festhaltekraft der Festhaltekupplung 64 überschritten wird, setzt sich der Stellschieber 2 unter der Einwirkung der von außen auf ihn einwirkenden Kraft in die eine oder andere Richtung in Bewegung, in der vorliegenden Darstellung der Fig. 2 nach links. Dabei wird ein Federelement der Festhaltekupplung 64 mechanisch vom Stellschieber 2 entkoppelt.

Die Fig. 3 zeigt eine Stellkraftkupplung 100 für einen Weichenantrieb 1, z. B. den in der Fig. 2 dargestellten oder einen anderen. Die Stellkraftkupplung 100 weist ein einteiliges, einstückiges oder integrales Kupplungsgehäuse 110 mit z. B. einem darauf montiertem Antriebsrad 112 auf, welches an zwei einander gegenüberliegenden Stirnseiten mit jeweils einem Einstellglied 127, welche in der vorliegenden Ausführungsform vorzugsweise als Einstellmuttern 127 ausgebildet sind, verschlossen ist. Die Einstellglieder 127 weisen eine Durchgangsöffnung auf, durch welche eine Gewindespindel 134 (in der Fig. 3 nicht dargestellt) hindurch durchführbar (Fig. 3 links) bzw. hineinerstreckbar (Fig. 3 rechts) ist.

Die Gewindespindel 134 ist im Bereich des Kupplungsgehäuses 110 von einer Kupplungsnabe 132 als einen Antrieb der Gewindespindel 134 umschließbar, wobei sich an deren äußerer Umfangsfläche ein jedes Einstellglied 127 durch ein Lager, vorliegend als ein Gleitlager ausgebildet, abstützt bzw. vice versa. Ein anderes Lager ist natürlich anwendbar. Die Kupplungsnabe 132 lässt sich auf diese Weise im Kupplungsgehäuse 110 nicht nur verdrehen, sondern auch in Axialrichtung Ax verschieben. Die Gewindespindel 134 und die Kupplungsnabe 132 bilden dabei eine drehfeste Spindel-Nabe-Verbindung 130, z. B. mittels einer Passfeder.

Zwischen der Kupplungsnabe 132 und einer Innenseite des Kupplungsgehäuses 110 ist eine Überlastkupplung 120 ausgebildet. In der vorliegenden Ausführungsform ist die Überlastkupplung 120 eine Lamellenkupplung mit Außenlamellen 113 des Kupplungsgehäuses 110 und Innenlamellen 133 der Kupplungsnabe 132. Hierbei sind die Außenlamellen 113 und die Innenlamellen 133 als Reiblamellen 113, 133 (Lamellenpaket 113, 133) ausgebildet, wobei die Außenlamellen 113 axial Ax verschieblich und drehfest innen im Kupplungsgehäuse 110 und die Innenlamellen 133 axial Ax verschieblich und drehfest außen auf Kupplungsnabe 131 vorgesehen sind.

Das Lamellenpaket 113, 133 der Überlastkupplung 120 ist durch zwei Druckstücke 123 der Überlastkupplung 120 begrenzt, die in der vorliegenden Ausführungsform als Druckringe 123 ausgebildet sind. Zwischen jedem Einstellglied 127 und einem betreffenden Druckstück 123 ist eine Vorspanneinrichtung 125 angeordnet, welche in Abhängigkeit von jedem Einstellglied 127 Vorspannkräfte auf die Druckstücke 123 ausübt. Die Vorspanneinrichtung 125 ist in der vorliegenden Ausführungsform vorzugsweise eine Federeinrichtung 125, insbesondere eine Tellerfederanordnung 125. Andere Federn oder Federeinrichtungen sind natürlich anwendbar.

Durch ein Verdrehen eines oder beider Einstellglieder 127 kann eine Vorspannkraft und somit auch eine Auslösekraft der Überlastkupplung 120 eingestellt werden. In einem bevorzugten Ausführungsbeispiel werden beide Einstellglieder 127 um einen gleichen Betrag verdreht, sodass gleiche Vorspannkräfte auftreten. Mit einer ungleichen Einstellung können Richtungsabhängigkeiten ausgeglichen werden. - Ferner stützt sich die Kupplungsnabe 132 über zwei Axialrillenkugellager 140 axial gegenüber dem jeweiligen Druckstück 123 ab, wobei die eigentliche Überlastkupplung 120 zwischen den Axialrillenkugellagern 140 in der Stellkraftkupplung 100 eingerichtet ist. Das Axialrillenkugellager 140 ist dabei bevorzugt als ein dreiteilig loses Axialrillenkugellager 140 ausgebildet.

Das jeweilige Axialrillenkugellager 140 ist mit einer Axiallagerschale 146, insbesondere einer kupplungsseitigen Axiallagerschale 146, auf der Kupplungsnabe 132, und mit einer Axiallagerschale 148, insbesondere einer kupplungsabseitigen Axiallagerschale 148, im betreffenden Drückstück 123 eingerichtet. Hierbei kann sich die Axiallagerschale 146 axial an einer Außenschulter 131 der Kupplungsnabe 132, und kann sich die Axiallagerschale 148 axial an einem Sicherungsring 126 im betreffenden Drückstück 123 abstützen. Zwischen den Axiallagerschalen 146, 148 befindet sich ein Kugelkäfig 147 mit den Wälzkugeln des Axialrillenkugellagers 140. Beide verbauten Axialrillenkugellager 140 selbst sind durch sich bevorzugt axial nicht vorgespannt.

Bei einem Umstellvorgang eines Weichenantriebs 1 (vgl. die Fig. 2) rotiert die Gewindespindel 134 um den Stellschieber 2 translatorisch zu bewegen. Dabei rotiert die Stellkraftkupplung 100. Am Ende des Umstellvorgangs soll eine entsprechende Endlage sowohl beim Ausfahren als auch bei Einfahren erreicht sein. Während des Umstellvorgangs und in der Phase ,Erreichen einer Endlage' wird die Überlastkupplung 120 in der Stellkraftkupplung 100 aktiv und unterbricht einen Kraftfluss (Begrenzung der Stellkraft). D. h. die Überlastkupplung 120 löst aus und die Rotationsbewegung des Antriebsmotors 22 zur Kupplungsnabe 132 wird unterbrochen.

Dabei und durch anderweitig über den Stellschieber 2 linear in die Stellkraftkupplung 100 eingeleitete Stöße (vgl. oben) kann es zu einem Schaden in der Stellkraftkupplung 100 kommen. Gemäß der Erfindung (vgl. auch oben die Erfindungsbeschreibung) besteht das Problem in einer konstruktiv bedingt fehlenden, beidseitigen axialen Vorspannung der sonst (also abseits der Begrenzung der Stellkraft) axial Ax nicht belasteten Axialrillenkugellager 140, sowohl beim Umstellen als auch bei Erreichen einer Endlage (Auslösen der Kupplung). Dadurch entsteht ein undefinierter Zustand. Es kann zum Abheben und Abrücken der Lagerelemente (Axiallagerschalen 146, 148, Kugelkäfig 147) zueinander kommen. Dadurch kann ein Lagerschaden entstehen, was zu einem funktionellen Versagen des Weichenantriebs 1 führen kann.

Um dem zu begegnen ist zwischen dem betreffenden Druckstück 123 und der jeweiligen kupplungsseitigen Axiallagerschale 146 des betreffenden Axialrillenkugellagers 140 eine Axiallager-Vorspanneinrichtung 150 eingerichtet. Bevorzugt ist die Axiallager-Vorspanneinrichtung 150 zwischen einer axialen Innenschulter des Druckstücks 123 und einer axialen Außenseite der Axiallagerschale 146 eingerichtet. Zur Ausbildung und Anordnung der Axiallager-Vorspanneinrichtung 150 vgl. auch oben die Erfindungsbeschreibung.

Hierdurch bleibt ein Kraftfluss einer nicht-ausgelösten Stellkraftkupplung 100 gegenüber einer Stellkraftkupplung 100 ohne Axiallager-Vorspanneinrichtung 150 enthalten. Durch das Vorsehen der Axiallager-Vorspanneinrichtung 150 zwischen dem jeweiligen Druckstück 123 und der Axiallagerschale 146 wird ein zusätzlicher Kraftfluss in der Stellkraftkupplung 100 eingerichtet. Dieser Kraftfluss geht vom Druckstück 123 über die Axiallager-Vorspanneinrichtung 150 auf das Axialrillenkugellager 140 und vice versa.

Ein Kraftfluss einer ausgelösten Stellkraftkupplung 100 ergibt sich für eine belastete Seite der Stellkraftkupplung 100 analog zur Stellkraftkupplung 100 ohne Axiallager-Vorspanneinrichtung 150. Das betreffende Axialrillenkugellager 140 befindet sich im Kraftfluss zwischen der Gewindespindel 134 und der Vorspanneinrichtung 125. - Für die entlastete Seite der Stellkraftkupplung 100 ergibt sich ein Kraftfluss analog zur Stellkraftkupplung 100 ohne Axiallager-Vorspanneinrichtung 150 jedoch plus einem zusätzlichen Kraftfluss wie bei einer nicht-ausgelösten Überlastkupplung 120.

Fehlt die jeweilige Axiallager-Vorspanneinrichtung 150 so liegen die Axialrillenkugellager 140 der nicht-ausgelösten Überlastkupplung 120 nicht in einem Kraftfluss, eine axiale Vorspannung der Axialrillenkugellager 140 existiert nicht. - Bei einem Auslösen der Überlastkupplung 120 erfolgt für eine belastete Seite der Stellkraftkupplung 100 eine axiale Vorspannung des betreffenden Axialrillenkugellagers 140 schlagartig. Die Lagerelemente (Axiallagerschalen 146, 148, Kugelkäfig 147) werden schlagartig aufeinander gepresst, was zu Schänden im und am betreffenden Axialrillenkugellager 140 führen kann.

Mittels der Axiallager-Vorspanneinrichtung 150 erfolgt eine konstante Aufbringung einer axialen Vorspannung des betreffenden Axialrillenkugellagers 140 auch dann wenn das betreffende Axialrillenkugellager 140 durch Auslösung der Überlastkupplung 120 entlastet wird. Das schlagartige Aufeinander-Pressen der Axiallagerschalen 146, 148 und des Kugelkäfigs 147 ist wirksam vermieden.

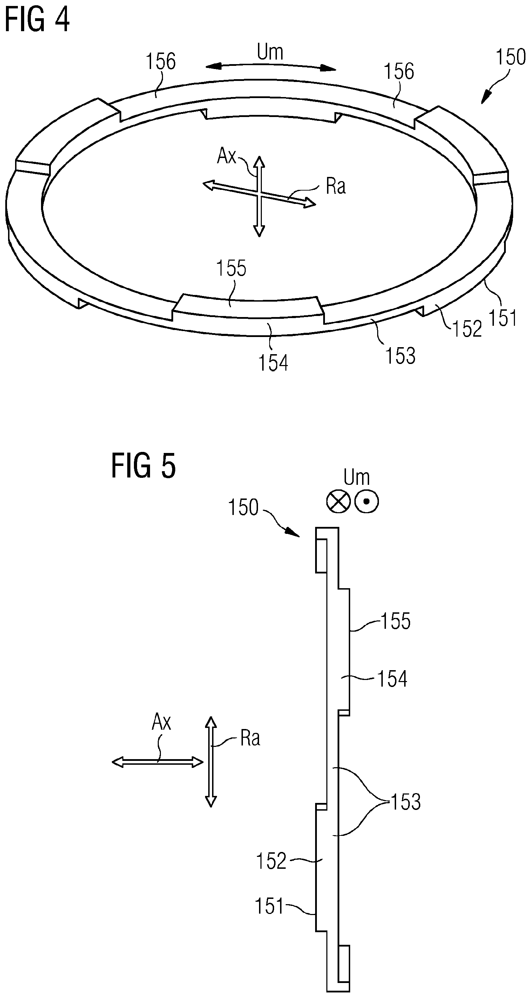

Die Fig. 4 und 5 zeigen ein Ausführungsbeispiel einer Axiallager-Vorspanneinrichtung 150 als einen profilierten Druckring 150. Das Funktionsprinzip des profilierten Druckrings 150 ist die Erzeugung einer Federkraft durch eine elastische Verformung seiner Federstege 156 zwischen seinen Druckvorrichtungen 152, 154 (Erhebungen). - Der Druckring 150 umfasst vorlegend eine ringförmige Zentrallage 153, von welcher in Umfangsrichtung Um wechselweise in die eine und dann in die andere Axialrichtung Ax Druckvorrichtungen 152, 154 abstehen. Die betreffende Druckvorrichtung 152, 154 ist dabei bevorzugt ringsektorförmig im Druckring 150 eingerichtet und kann im Wesentlichen quaderförmige Querschnitte besitzen.

Vorliegend sind je Seite des Druckrings 150 drei Druckvorrichtungen 152, 154 eingerichtet, welche jeweils insgesamt gegeneinander in Umfangsrichtung Um um einen bestimmten Winkelbetrag verlagert im Druckring 150 eingerichtet sind. Hierdurch entstehen Federstege 156 im Druckring 150, welche eine geringere Dicke als die Druckvorrichtungen 152, 154 aufweisen. Eine andere Anzahl von Druckvorrichtungen 152, 154 ist natürlich anwendbar, wobei es bevorzugt ist auf jeder Axialseite des Druckrings 150 die gleiche Anzahl von Druckvorrichtungen 152, 154 vorzusehen.

Die Druckvorrichtungen 152 einer Axialseite des Druckrings 150 dienen dabei mit ihren bevorzugt ringsektorförmigen Gleitlagerflächen 151 einer Anlage des Druckrings 150 am Druckstück 123. Und die Druckvorrichtungen 154 der anderen Axialseite des Druckrings 150 dienen dabei mit ihren bevorzugt ringsektorförmigen Gleitlagerflächen 155 einer Anlage des Druckrings 150 am Lagerring 146. - Eine andere Axiallager-Vorspanneinrichtung 150, wie z. B. eine Feder oder eine elastische Einrichtung aus einem elastischen Material, ist natürlich anwendbar.

## Patentansprüche

1. Stellkraftkupplung (100), insbesondere für einen elektromechanischen Weichenantrieb (1) im Bahnverkehr, mit einer um eine Axialrichtung (Ax) der Stellkraftkupplung (100) herum rotierbar antreibbaren Kupplungsnabe (132), in welcher eine Gewindespindel (134) montierbar ist, wobei
die Kupplungsnabe (132) über eine Überlastkupplung (120) mit einem rotierbaren Kupplungsgehäuse (110) der Stellkraftkupplung (100) mechanisch gekoppelt ist und das Kupplungsgehäuse (110) mittels zweier koaxialer Axialrillenkugellager (140, 140) auf der Kupplungsnabe (132) drehbar gelagert ist, **dadurch gekennzeichnet, dass**
• die Kupplungsnabe (132) radial (Ra) innerhalb einer Überlastkupplung (120) eingerichtet ist, wobei sich die Kupplungsnabe (132) über ein jeweiliges Axialrillenkugellager (140) in einem betreffenden Druckstück (123) der Überlastkupplung (120) axial abstützt und wobei die zwei Druckstücke (123, 123) auf ein Lamellenpaket (113, 133; ...) der Überlastkupplung (120) axial (Ax) vorgespannt einwirken, und
• ein jeweiliges Axialrillenkugellager (140) von einer Axiallager-Vorspanneinrichtung (150) in Axialrichtung (Ax) vorgespant in der Stellkraftkupplung (100) eingerichtet ist.

2. Stellkraftkupplung (100) gemäß vorhergehendem Anspruch, **dadurch gekennzeichnet, dass**:
• das jeweilige Axialrillenkugellager (140) als eine dreiteilig lose oder eine einteilige Baugruppe (140) ausgebildet ist,
• die Axiallagerschalen (146, 148) des jeweiligen Axialrillenkugellagers (140) in horizontaler Axialrichtung (Ax) angeordnet sind, und/oder
• das jeweilige Axialrillenkugellager (140) selbst als ein spielarmes oder ein mechanisch vorgespanntes Axialrillenkugellager ausgebildet ist.

3. Stellkraftkupplung (100) gemäß einem der vorhergehenden Ansprüche, **dadurch gekennzeichnet, dass** die Stellkraftkupplung (100) derart ausgebildet ist, dass:
• in einem Stellbetrieb der Stellkraftkupplung (100) die Überlastkupplung (120) im Wesentlichen geschlossen bleibt,
• bei einem Begrenzen einer Stellkraft der Gewindespindel (134) durch die Stellkraftkupplung (100), die Überlastkupplung (120) gelöst ist, und/oder
• beim Begrenzen der Stellkraft die axial (Ax) gegeneinander vorgespannten Lamellen (113, 133) der Überlastkupplung (120) aneinander vorbeigleiten.

4. Stellkraftkupplung (100) gemäß einem der vorhergehenden Ansprüche, **dadurch gekennzeichnet, dass** das Lamellenpaket (113, 133; ...) der Überlastkupplung (120) axial (Ax) zwischen den Axialrillenkugellagern (140) eingerichtet ist.

5. Stellkraftkupplung (100) gemäß einem der vorhergehenden Ansprüche, **dadurch gekennzeichnet, dass** die betreffende Axiallager-Vorspanneinrichtung (150) als ein federnder Druckring (150), als eine Feder oder als eine elastische Einrichtung aus einem elastischen Material ausgebildet ist.

6. Stellkraftkupplung (100) gemäß einem der vorhergehenden Ansprüche, **dadurch gekennzeichnet, dass** die betreffende Axiallager-Vorspanneinrichtung (150) als ein federnder Druckring (150) ausgebildet ist, wobei:
• der Druckring (150) eine ebene ringförmige Zentrallage (153) aufweist, von welcher Druckvorrichtungen (152, 154) des Druckrings (150) in Axialrichtung (Ax) abstehen,
• in Umfangsrichtung (Um) der Stellkraftkupplung (100) die Druckvorrichtungen (152, 154) wechselweise in die eine und dann in die andere Axialrichtung (Ax) abstehen, und/oder
• zwei in Umfangsrichtung (Um) direkt benachbarte Druckvorrichtungen (152, 154) unterschiedlicher Axialseiten des Druckrings (150) über einen Federsteg (156) zueinander beabstandet sind.

7. Stellkraftkupplung (100) gemäß einem der vorhergehenden Ansprüche, **dadurch gekennzeichnet, dass**:
• die Druckvorrichtungen (152, 154) ringsektorförmig im Druckring (150) eingerichtet sind,
• eine Oberfläche einer Druckvorrichtung (152, 154) als eine Gleitlagerfläche (151, 155) ausgebildet ist, und/oder
• eine einer Gleitlagerfläche (151, 155) der Druckvorrichtung (152, 154) axial (Ax) gegenübelliegende Fläche der Zentrallage (153) ebenfalls als eine Gleitlagerfläche ausgebildet ist.

8. Stellkraftkupplung (100) gemäß einem der vorhergehenden Ansprüche, **dadurch gekennzeichnet, dass** die betreffende Axiallager-Vorspanneinrichtung (150):
• in Axialrichtung (Ax) zwischen der Überlastkupplung (120) und dem jeweiligen Axialrillenkugellager (140) eingerichtet ist,
• in Axialrichtung (Ax) zwischen einer Innenschulter (124) des/eines Druckstücks (123) und dem jeweiligen Axialrillenkugellager (140) eingerichtet ist, und/oder
• in Radialrichtung (Ra) mit einem Abstand über einer Außenschulter (131) der Kupplungsnabe (132) eingerichtet ist.

9. Stellkraftkupplung (100) gemäß einem der vorhergehenden Ansprüche, **dadurch gekennzeichnet, dass** das jeweilige Axialrillenkugellager (140) axial (Ax) einerseits mittels eines Sicherungsrings (126) im Druckstück (123), und axial (Ax) andererseits von der Außenschulter (131) der Kupplungsnabe (132) sowie der Axiallager-Vorspanneinrichtung (150) in der Stellkraftkupplung (100) gehalten ist.

10. Stellkraftkupplung (100) gemäß einem der vorhergehenden Ansprüche, **dadurch gekennzeichnet, dass**:
• die zwei Druckstücke (123, 123) axial (Ax) außen jeweils von einer Vorspanneinrichtung (125, 125) gegeneinander axial (Ax) vorgespannt in der Stellkraftkupplung (100) eingerichtet sind,
• eine mechanische Vorspannung der jeweiligen Vorspanneinrichtung (125, 125) von einem jeweils axial (Ax) außen an der Vorspanneinrichtung (125, 125) eingerichteten Einstellglied (127, 127) einstellbar und aufrechterhalten ist, und/oder
• das jeweilige Einstellglied (127) innen im Kupplungsgehäuse (110) eingerichtet ist, wobei das Einstellglied (127) bevorzugt mittels einer Einstellverschraubung in Axialrichtung (Ax) verstellbar im Kupplungsgehäuse (110) eingerichtet ist.

11. Elektromechanische Stelleinrichtung (4) für einen Weichenantrieb (1) im Bahnverkehr, **dadurch gekennzeichnet, dass** die Stelleinrichtung (4) einen Antriebsmotor (22) und eine Stellkraftkupplung (100) umfasst, wobei die Stellkraftkupplung (100) gemäß einem der vorhergehenden Ansprüche ausgebildet ist.

12. Weichenantrieb (1) für den Bahnverkehr, **dadurch gekennzeichnet, dass** der Weichenantrieb (1) eine Stelleinrichtung (4) und/oder eine Stellkraftkupplung (100) umfasst, wobei die Stelleinrichtung (4) und/oder die Stellkraftkupplung (100) gemäß einem der vorhergehenden Ansprüche ausgebildet ist.

## Claims

1. Actuating force coupling (100), in particular for an electromechanical points drive (1) in rail traffic, with a drivable coupling hub (132), which is able to rotate about an axial direction (Ax) of the actuating force coupling (100) and in which a threaded spindle (134) can be mounted, wherein
the coupling hub (132) is mechanically coupled to a rotatable coupling housing (110) of the actuating force coupling (100) via an overload coupling (120) and the coupling housing (110) is rotatably mounted on the coupling hub (132) by means of two coaxial deep groove ball thrust bearings (140, 140), **characterised in that**
• the coupling hub (132) is configured radially (Ra) inside an overload coupling (120), wherein the coupling hub (132) is axially supported in a pressure piece (123) in question of the overload coupling (120) via a respective deep groove ball thrust bearing (140) and wherein the two pressure pieces (123, 123) act on a plate stack (113, 133; ...) of the overload coupling (120) in an axially (Ax) pretensioned manner, and
• a respective deep groove ball thrust bearing (140) is configured in the actuating force coupling (100) in a manner pretensioned in the axial direction (Ax) by an axial bearing pretensioning facility (150).

2. Actuating force coupling (100) according to the preceding claim, **characterised in that**
• the respective deep groove ball thrust bearing (140) is embodied as a three-piece loose assembly (140) or a one-piece assembly (140),
• the axial bearing shells (146, 148) of the respective deep groove ball thrust bearing (140) are arranged in the horizontal axial direction (Ax), and/or
• the respective deep groove ball thrust bearing (140) is itself embodied as a low-play or a mechanically pretensioned deep groove ball thrust bearing.

3. Actuating force coupling (100) according to one of the preceding claims, **characterised in that** the actuating force coupling (100) is embodied in such a manner that
• the overload coupling (120) remains substantially closed during actuating operation of the actuating force coupling (100),
• the overload coupling (120) is released on a limiting of an actuating force of the threaded spindle (134) by the actuating force coupling (100), and/or
• on limiting of the actuating force, the plates (113, 133) of the overload coupling (120) that are axially (Ax) pretensioned in relation to one another slide past one another.

4. Actuating force coupling (100) according to one of the preceding claims, **characterised in that** the plate stack (113, 133; ...) of the overload coupling (120) is configured axially (Ax) between the deep groove ball thrust bearings (140).

5. Actuating force coupling (100) according to one of the preceding claims, **characterised in that** the axial bearing pretensioning facility (150) in question is embodied as a resilient pressure ring (150), as a spring or as an elastic facility made of an elastic material.

6. Actuating force coupling (100) according to one of the preceding claims, **characterised in that** the axial bearing pretensioning facility (150) in question is embodied as a resilient pressure ring (150), wherein:
• the pressure ring (150) has a flat ring-shaped central location (153), from which pressure apparatuses (152, 154) of the pressure ring (150) protrude in the axial direction (Ax),
• in the peripheral direction (Um) of the actuating force coupling (100), the pressure apparatuses (152, 154) protrude alternately into the one axial direction (Ax) and then into the other axial direction (Ax), and/or
• two pressure apparatuses (152, 154), which are directly adjacent in the peripheral direction (Um), of different axial sides of the pressure ring (150) are spaced apart in relation to one another via a spring web (156).

7. Actuating force coupling (100) according to one of the preceding claims, **characterised in that**:
• the pressure apparatuses (152, 154) are configured in the shape of a ring sector in the pressure ring (150),
• a surface of a pressure apparatus (152, 154) is embodied as a sliding bearing surface (151, 155), and/or
• a surface, which lies axially (Ax) opposite a sliding bearing surface (151, 155) of the pressure apparatus (152, 154), of the central bearing (153) is likewise embodied as a sliding bearing surface.

8. Actuating force coupling (100) according to one of the preceding claims, **characterised in that** the axial bearing pretensioning facility (150) in question:
• is configured between the overload coupling (120) and the respective deep groove ball thrust bearing (140) in the axial direction (Ax),
• is configured between an inner shoulder (124) of the/a pressure piece (123) and the respective deep groove ball thrust bearing (140) in the axial direction (Ax), and/or
• is configured with a spacing in the radial direction (Ra) via an outer shoulder (131) of the coupling hub (132).

9. Actuating force coupling (100) according to one of the preceding claims, **characterised in that** the respective deep groove ball thrust bearing (140) is held in the actuating force coupling (100) axially (Ax) on one side by means of a securing ring (126) in the pressure piece (123), and axially (Ax) on the other side by the outer shoulder (131) of the coupling hub (132) as well as the axial bearing pretensioning facility (150).

10. Actuating force coupling (100) according to one of the preceding claims, **characterised in that**:
• the two pressure pieces (123, 123) are configured in the actuating force coupling (100), axially (Ax) on the outside, in each case pretensioned axially (Ax) in relation to one another by a pretensioning facility (125, 125),
• a mechanical pretensioning of the respective pretensioning facility (125, 125) can be adjusted and is maintained by an adjustment element (127, 127) configured in each case axially (Ax) on the outside on the pretensioning facility (125, 125), and/or
• the respective adjustment element (127) is configured on the inside in the coupling housing (110), wherein the adjustment element (127) is preferably configured such that it can be repositioned in the coupling housing (110) by means of an adjustment screwing in the axial direction (Ax).

11. Electromechanical adjustment facility (4) for a points drive (1) in rail traffic, **characterised in that** the adjustment facility (4) comprises a drive motor (22) and an actuating force coupling (100), wherein the actuating force coupling (100) is embodied according to one of the preceding claims.

12. Points drive (1) for rail traffic, **characterised in that** the points drive (1) comprises an adjustment facility (4) and/or an actuating force coupling (100), wherein the adjustment facility (4) and/or the actuating force coupling (100) is/are embodied according to one of the preceding claims.

## Revendications

1. Embrayage (100) à force de réglage, en particulier pour un entraînement (1) électromécanique d'aiguille du trafic sur voie, comprenant un moyeu (132) d'embrayage, qui peut être entraîné en rotation autour d'une direction (Ax) axiale de l'embrayage (100) à force de réglage et dans lequel une broche (134) filetée peut être montée, dans lequel
le moyeu (132) d'embrayage est accouplé mécaniquement par un embrayage (120) à surcharge à une enveloppe (110) tournante de l'embrayage (100) à force de réglage, et l'enveloppe (110) de l'embrayage est montée tournante sur le moyeu (132) de l'embrayage au moyen de deux roulements (140, 140) rainurés à billes coaxiaux,
**caractérisé en ce que**
• le moyeu (132) de l'embrayage est monté radialement (Ra) à l'intérieur d'un embrayage (120) de surcharge, dans lequel le moyeu (132) de l'embrayage s'appuie axialement par un roulement (140) rainuré à billes axial respectif dans une pièce (123) de pression le concernant de l'embrayage (120) de surcharge et dans lequel les deux pièces (123, 123) de pression agissent en précontrainte axialement (Ax) sur un paquet (113, 133 ; ...) de lamelles de l'embrayage (120) de surcharge, et
• un roulement (140) rainuré à billes axial respectif est monté dans l'embrayage (100) à force de réglage en étant précontraint dans la direction (Ax) axiale par un dispositif (150) de précontrainte de roulement axial.

2. Embrayage (100) à force de réglage suivant la revendication précédente, **caractérisé en ce que** :
• le roulement (140) rainuré à bille axial respectif est constitué sous la forme d'un module (140) lâche en trois parties ou d'un module en une seule partie,
• les coques (146, 148) de roulement axial du roulement (140) rainuré à billes respectif sont disposées dans une direction (Ax) axiale horizontale, et/ou
• le roulement (140) rainuré à billes axial respectif est constitué soi-même sous la forme d'un roulement rainuré à billes axial avec peu de jeu ou précontraint mécaniquement.

3. Embrayage (100) à force de réglage suivant l'une des revendications précédentes, **caractérisé en ce que** l'embrayage (100) à force de réglage est constitué, de manière à ce que :
• dans un fonctionnement de réglage de l'embrayage (100) à force de réglage, l'embrayage (120) à surcharge reste sensiblement fermé,
• lors d'une limitation de la force de réglage de la broche (134) filetée par l'embrayage (100) à force de réglage, l'embrayage (120) à surcharge est débrayé, et/ou
• lors d'une limitation de la force de réglage, les lamelles (113, 133) précontraintes les unes par rapport aux autres axialement (Ax) de l'embrayage (120) à surcharge glissent les unes contre les autres.

4. Embrayage (100) à force de réglage suivant l'une des revendications précédentes, **caractérisé en ce que** le paquet (113, 133 ; ...) de lamelles de l'embrayage (120) à surcharge est disposé axialement (Ax) entre les roulements (140) rainurés à billes axiaux.

5. Embrayage (100) à force de réglage suivant l'une des revendications précédentes, **caractérisé en ce que** le dispositif (150) de précontrainte des roulements axiaux concernés est constitué sous la forme d'une bague (150) de pression élastique, sous la forme d'un ressort ou sous la forme d'un dispositif élastique en un matériau élastique.

6. Embrayage (100) à force de réglage suivant l'une des revendications précédentes, **caractérisé en ce que** le dispositif (150) de précontrainte de roulements axiaux est constitué sous la forme d'une bague (150) de pression élastique, dans lequel :
• la bague (150) de pression a une couche (153) annulaire centrale, de laquelle partent dans la direction (Ax) axiale, des dispositifs (152, 154) de pression de la bague (150) de pression,
• dans la direction (Um) du pourtour de l'embrayage (100) à force de réglage, les dispositifs (152, 154) de pression partent en alternance dans l'un, puis dans l'autre sens (Ax) axial, et/ou
• deux dispositifs (152, 154) voisins directement dans la direction (Um) du pourtour de faces axiales différentes de la bague (150) de pression sont mis à distance l'un de l'autre par une entretoise (156) à ressort.

7. Embrayage (100) à force de réglage suivant l'une des revendications précédentes, **caractérisé en ce que** :
• les dispositifs (152, 154) de pression sont agencés en forme de segment annulaire de la bague (150) de pression,
• une surface d'un dispositif (152, 154) de pression est constituée en surface (151, 155) de palier lisse, et/ou
• une surface, opposée axialement (Ax) à une surface (151, 155) de palier lisse du dispositif (152, 154) de pression, de la couche (153) centrale est constituée également sous la forme d'une surface de palier lisse.

8. Embrayage (100) à force de réglage suivant l'une des revendications précédentes, **caractérisé en ce que** le dispositif (150) de précontrainte de roulements axiaux concerné :
• est monté dans la direction (Ax) axiale entre l'embrayage (120) de surcharge et le roulement (140) rainuré à billes axial respectif,
• est monté dans la direction (Ax) axiale entre un épaulement (124) intérieur de la/d'une pièce (123) de pression et le roulement (140) rainuré à billes axial respectif, et/ou
• est monté dans la direction (Ra) radiale avec une distance par un épaulement (131) extérieur du moyeu (132) de l'embrayage.

9. Embrayage (100) à force de réglage suivant l'une des revendications précédentes, **caractérisé en ce que** le roulement (140) rainuré à billes axial respectif est maintenu axialement (Ax) d'une part au moyen d'une bague (126) de sécurité dans la pièce (123) de pression, et axialement (Ax) d'autre part par l'épaulement (131) extérieur du moyeu (132) d'embrayage, ainsi que par le dispositif (150) de précontrainte de roulements axiaux dans l'embrayage (100) à force de réglage.

10. Embrayage (100) à force de réglage suivant l'une des revendications précédentes **caractérisé en ce que** :
• les deux pièces (123, 123) de pression sont disposées axialement (Ax) à l'extérieur respectivement d'un dispositif (125, 125) de précontrainte, en étant précontraintes axialement (Ax) l'une par rapport à l'autre dans l'embrayage (100) à force de réglage,
• une précontrainte mécanique du dispositif (125, 125) de précontrainte respectif est réglable et peut être maintenue par un élément (127, 127) de réglage monté respectivement axialement (Ax) à l'extérieur du dispositif (125, 125) de précontrainte, et/ou
• l'élément (127) respectif de réglage est monté à l'intérieur de l'enveloppe (110) de l'embrayage, dans lequel l'élément (127) de réglage est monté dans l'enveloppe (110) de l'embrayage, de préférence au moyen d'un vissage de réglage réglable dans la direction (Ax) axiale.

11. Dispositif (4) électromécanique de réglage pour un entraînement (1) d'aiguille du trafic sur voie, **caractérisé en ce que** le dispositif (4) de réglage comprend un moteur (22) d'entraînement et un embrayage (100) à force de réglage, dans lequel l'embrayage (100) à force de réglage est constitué suivant l'une des revendications précédentes.

12. Entraînement (1) d'aiguille pour le trafic sur voie, **caractérisé en ce que** l'entraînement (1) d'aiguille comprend un dispositif (4) de réglage et/ou un embrayage (100) à force de réglage, dans lequel le dispositif (4) de réglage et/ou l'embrayage (100) à force de réglage est constitué suivant l'une des revendications précédentes.
